# EUROPEAN PATENT APPLICATION

(11) **EP 0 930 258 A1**
(43) Date of publication of application: **21.07.1999**
(21) Application number: 97925076.8
(22) Date of filing: 18.06.1997
(51) Int. Cl.: B65G 67/02

(54) **AUTOMATIC INSTALLATION FOR LATERAL LOADING AND UNLOADING OF PALLETS TO AND FROM TRUCKS**

(71) Applicant: INPROPACK, S.L., E-28940 Fuenlabrada (Madrid) (ES)
(72) Inventor: ORTEGO SORIA, Angel, E-28940 Fuenlabrada (ES)
(74) Representative: Perez Bonal, Bernardo
(86) International application number: ES9700150
(87) International publication number: WO9857876

(57) **Abstract**

The installation provides for a reduction of the time used to load the platform (4) of a trailer, by means of a loading terminal, with or without dock, and guided by means of wire or using a belt or roller conveyor unit, and incorporating a portal (1) with telescopic arm can reach the internal opposite side of the box. The installation can also include a line for the supply (5) of paired pallets (6), the truck cabin going beyond the loading line or not.

## Description

### OBJECT OF THE INVENTION

The invention which is the object of the present memory refers to an automatic system for transferring pallets from highly mechanised warehouses to lorries, and vice versa, although its use is not ruled out in warehouses with little or no mechanisation, or even if the pallets are from a production line or a mixed production and storage line.

This system allows reducing loading times from the platform to the trailer to about 4 minutes, and in double loading from both sides to half as much, by using a loading terminal, with or without a wharf, whether guided by filaments, conveyor belt or rollers, by incorporating one or two bridges with a telescoping crane and advancing tandem, the bridge being aligned parallel to the side of the lorry, so that the telescoping arm reaches the inner side on the far end, and is also provided with the installation of one or more feeding lines of paired pallets, this feeding line possibly extending beyond the lorry cab.

### BACKGROUND OF THE INVENTION

Warehouses arrange their accesses for automatic loading and unloading, depending on the alignment of the stands, between rails on which travel cranes which transfer freight, either by multiple access rails or by having one crane per rail and a double parallel line of stands, as well as areas for transfer and preparation for dispatch of loads, with continuous filament guiding for carts, conveyor belts, rollers, etc.

In the dispatch area the freight is either aligned by dispatch area, or in the loading wharves themselves, using the "Programmable Cart for Elaboration of Orders", patent P 9100230, of the "Tying Machine", as well as Utility Model no. U9300109 of the "Tying Machine for Loads in Pallets" of the applicant, as well as conventional leveling platforms of the wharf terminal, with different accidents in the remote controlled carts, now replaced by the "Automatic system for loading and unloading of pallets on lorries, particularly in automated warehouses", as in the applicant's most recent patent, no. 9400058.

This patent is based on a telescoping crane which may be moved along aligned bridges, and which carries a cart with free telescoping wheels and the corresponding blades for lower manipulation of these pallets by twos. It also has an approximation system for the pallets before they are jointly introduced in the lorry platform and an alignment control device for the lorry box by laser, which also detects their proximity in order to locate the consecutive pallets during the automatic loading or unloading process.

### DESCRIPTION OF THE INVENTION

In a loading terminal, whether with a wharf or not, regardless of whether it is guided by filaments or by belt or rollers, as long as placed in a simple parallel alignment or in double line, the freight to be dispatched is on both sides of the lorry, conveniently piled in pallets, the load line possibly extending beyond the lorry cab.

A telescopic crane is placed between a set of movable bridges which are placed at right angles to the lorry, so that the telescoping arm of the crane may reach either the longitudinal axis of the lorry or its opposite side.

The crane has the conventional advance tandem; the telescoping device; the raising and lowering system for vertical displacement of the blades for handling the paired pallets, which allow the telescoping device to introduce the goods in the longitudinal axis or the far side of the box.

Before loading, the crane extends its telescoping system and checks the alignment of the lorry with respect to the load line, or in the case of a terminal with a wharf, with respect to this and its height relative to the platform.

The loading operation in the manner indicated begins, and each time two aligned
pallets are deposited, the movable bridges on one of the sides or both of the lorry platform move, whether guided by rails or not, to allow the extendable telescoping arms to repeat this operation as often as necessary, until the lorry is completely loaded, with the telescoping crane performing the backward movements in the intervals of the bridge or bridges.

The general unloading process is identical to the loading process, albeit in the opposite order, with all the locations of the aligned front pairs of pallets being checked so that the blades may turn properly and adapt to the small deviations of the location of the pallets due to shifting during transport, and even carrying out the final check of the removal of the last pair of pallets.

This arrangement of lateral loading of the platform in its simple pallet pair construction greatly reduces loading times, down to 4 minutes to fill a trailer and in its double loading version, on both sides, reduces the time to exactly half as much.

### DESCRIPTION OF THE DRAWINGS

In order to complement the description herein given and with the aim of facilitating a better and clearer understanding of the characteristics of the invention, attached as an integral part of the descriptive memory is a set of drawings where with an illustrative and non-limiting nature the following is shown:

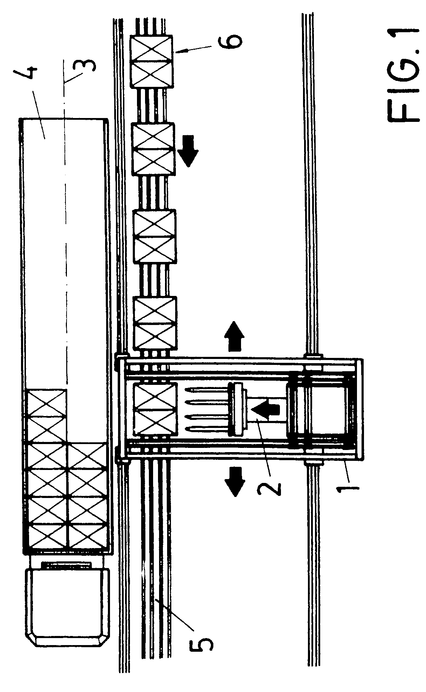

Figure 1 shows a schematic top view of the loading area with a lorry in an automatic loading process from one of its sides, as well as the movable bridges and the paired pallets feeding line.

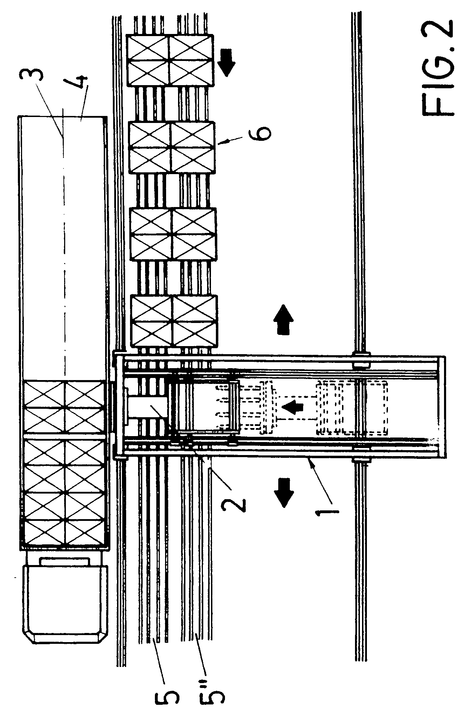

Figure 2 shows a schematic top view of the loading area with a lorry in the automatic loading process from one of its sides, as well as the moving bridges and two attached lines for feeding paired pallets.

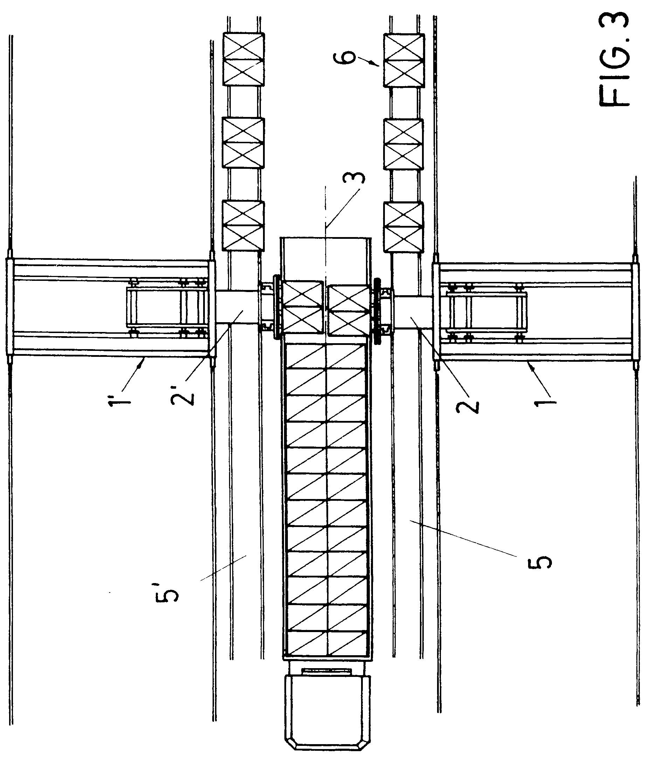

Figure 3 shows a variation of the above schematic top view of the loading area of figures 1 and 2 with a lorry in an automatic loading process from both sides as well as two movable bridges and the two feeding lines for paired pallets.

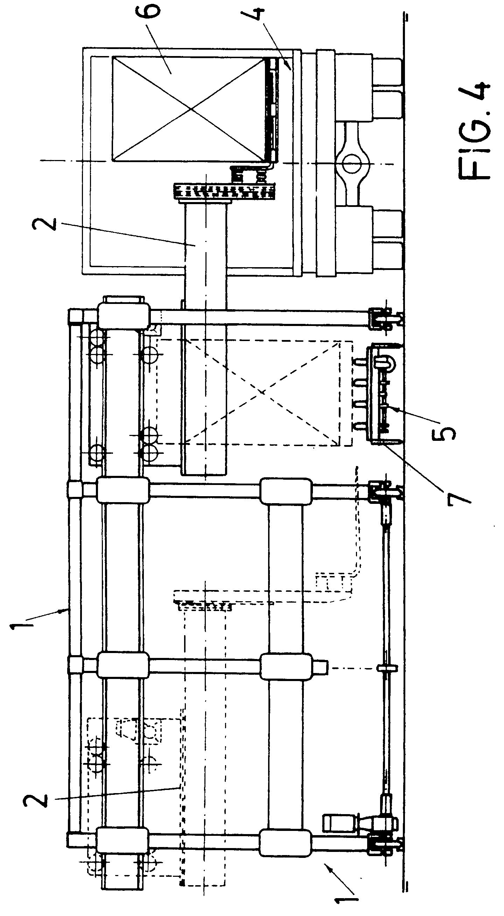

Figure 4 shows an elevation sketch of the aforementioned system, as in figure 1, in which are shown the location of the lorry, the start of loading with the telescoping arm advancing towards the lorry and lowering its load, as well as the movable bridge, and in a dotted line, the arrangement prior to loading of the following pair of pallets.

### PREFERRED EMBODIMENT OF THE INVENTION

In view of the figures discussed, one may see the proposed automatic system for lateral loading and unloading of pallets on lorries, particularly in automated warehouses, reducing loading time of a trailer platform (4) to about 4 minutes and in double loading, on both sides, to half as much, of the type used in a loading terminal with or without a wharf, whether guided by filament or conveyor belt or rollers, as well as those incorporating a bridge (1) with a telescoping crane (2) equipped with an advance tandem, characterised in that the bridge (1) is in simple parallel alignment or double (1) and (1') on both sides of the lorry, following the longitudinal axis (3) of the lorry loading platform (4) so that it may reach the bottom of the box, with the paired pallet feeding line (5) either in single or double arrangement (5) and (5'), this loading line (5) or loading lines (5) and (5') possibly extending beyond the cab of the lorry.

Crane (2) or telescoping cranes (2) and (2') are placed at right angles to the lorry so that the telescoping arm may reach easily the longitudinal axis (3) of the lorry box or its far end, while bridge (1) or bridges (1) and (1') make up the movable construction, guided or not by rails (7), and each time a pair of pallets (6) is deposited bridge (1) and/or (1') move while the telescoping crane arms (2) and/or (2') move back towards their original position; this operation is repeated until the lorry is fully loaded, the order being reversed in the unloading process.

Crane or cranes (2), (2') previously extend the telescoping arms and check the alignment of the lorry with the loading line (5) or (5'), or in a terminal with a wharf, the alignment of the lorry edge and the relative height of the platform (4), then proceeding to the single or double loading operation of the paired pallets (6).

During unloading the location of the frontally aligned paired pallets (6) are
checked, to ensure the blades may turn freely and adapt to the slight deviations in location, while the removal of the last pair of pallets is also checked.

Alternatively, the system may have a double feeding line (5) and (5') of paired pallets (6) next to each other so that the telescoping arm of the crane (2) reaches the far inner side wall of the box, and at the same time fills that section of the platform (4).

This description is not extended further in the understanding that any expert in the field would have enough information to understand the scope of the invention and the advantages thereof, as well as to reproduce the same.

It is understood that, as far as they do not alter the essence of the invention, variations in the materials, shape, size and arrangement of the elements are subject to variations within the same characterisation.

The terms employed in the description and its meaning must always be taken in a non-limiting manner.

## Claims

1. Automatic system for lateral loading and unloading of pallets on lorries, reducing loading time for a trailer platform (4) to about 4 minutes and in double loading on both sides to half as much, of the type used in a loading terminal, either with or without a wharf, whether filament guided or by conveyor belt or rollers, as well as those including a bridge (1) with a telescoping crane (2) equipped with an advance tandem, characterised in that it consists of:
- A bridge (1) aligned parallel to the side of the lorry, following the longitudinal axis (3) of its loading platform (4), so that the telescoping arm of crane (2) may reach the far side of the box.
- A feeding line (5) for paired pallets (6), this loading line (5) possibly extending beyond the lorry cab.

2. Automatic system for lateral loading and unloading of pallets on lorries, as above claim, characterised in that crane (2) extends the telescoping system and checks the alignment of the lorry with respect to its loading line (5), the paired pallet (6) loading operation proceeding afterwards.

3. Automatic system for lateral loading and unloading of pallets on lorries, as in above claims, characterised in that crane (2) is placed at right angles to the lorry, so that the telescoping device reaches the longitudinal axis (3) of the lorry box, while bridge (1) is made movable and each time a paired pallet (6) is deposited on platform (4) the bridge (1) moves while the extendable arm of crane (2) moves back towards its initial position, this operation being repeated until the lorry is completely loaded, the unloading process being performed in the reverse order.

4. Automatic system for lateral loading and unloading of pallets on lorries, as in above claims, characterised in that during unloading the location of the pairs of frontally aligned paired pallets (6) are checked, so that the blades may turn freely and adapt to the slight variations in location, as well as checking that the last paired pallets are removed.

5. Automatic system for lateral loading and unloading of pallets on lorries, as in
above claims, characterised in that the moving bridge (1) is replaced by a double set of bridges (1) and (1') on both sides of the lorry.

6. Automatic system for lateral loading and unloading of pallets on lorries, as in above claims, characterised in that the corresponding telescoping cranes (2) and (2') which are placed at right angles to the lorry platform (4) feed it on both sides.

7. Automatic system for lateral loading and unloading of pallets on lorries, as in above claims, characterised in that the single paired pallets feeding line (5) is replaced by two lines (5 ) and (5').

8. Automatic system for lateral loading and unloading of pallets on lorries, as in above claims, characterised in that, for terminals with wharves, the alignment of the edge with the lorry platform (4) is checked as well as the relative heights of the wharf and the platform.

9. Automatic system for lateral loading and unloading of pallets on lorries, as in above claims 1 to 4, characterised in that the system has a double feeding line (5 ) and (5') of paired pallets (6) which are next to each other, so that the telescoping arm of crane (2) reaches the inner side on the far end of the box and also that section of the platform (4).
